# EUROPEAN PATENT SPECIFICATION

(11) **EP 3 276 917 B1**
(45) Date of publication and mention of the grant of the patent: **22.12.2021**
(21) Application number: 16767704.6
(22) Date of filing: 17.03.2016
(51) Int. Cl.: H04L 29/08, H04L 29/06

(54) **TERMINAL REMOTE ASSISTANCE METHOD, DEVICE AND SYSTEM**
VERFAHREN, VORRICHTUNG UND SYSTEM ZUR ENDGERÄTEFERNASSISTENZ
PROCÉDÉ, DISPOSITIF ET SYSTÈME D'ASSISTANCE À DISTANCE DE TERMINAL

(30) Priority: 25.03.2015 CN 201510134537
(43) Date of publication of application: 31.01.2018
(73) Proprietor: Alibaba Group Holding Limited, Grand Cayman (KY)
(72) Inventor: AN, Qing, Hangzhou Zhejiang 311121 (CN); ZHU, Hongru, Hangzhou Zhejiang 311121 (CN); FANG, Qiang, Hangzhou Zhejiang 311121 (CN)
(74) Representative: Boult Wade Tennant LLP
(86) International application number: PCT/CN2016/076569
(87) International publication number: WO 2016/150327

(56) References cited:
- CN-A- 101 035 043
- CN-A- 101 035 043
- CN-A- 101 400 149
- CN-A- 104 394 191
- US-A1- 2011 244 928
- US-A1- 2012 216 218
- US-A1- 2014 309 812

## Description

This application claims the priority of Chinese patent application No. 201510134537.1, filed on March 25, 2015 and entitled "Method, Apparatus, and System for Providing Remote Terminal Assistance", and PCT Application No. PCT/CN2016/076569, titled "Method, Apparatus, and System for Providing Remote Terminal Assistance" filed on March 17, 2016.

### BACKGROUND

### Technical Field

The disclosure relates to the field of remote control of electronic devices, and specifically to methods, apparatuses, and systems for providing remote terminal assistance via an intermediary server.

### Description of the Related Art

Currently, providing remote assistance to computers by using terminal devices (e.g., mobile phones, vehicle-mounted terminals, tablet PCs, etc.) has been widely practiced. However, remote assistance technology between terminal devices has not yet fully developed. Even though technical solutions have been disclosed, inadequacies in terms of user experience and performance still exist.

In current systems, the following method is used to provide a remote desktop between mobile terminals: a task server in a wireless network arranges all authorized mobile terminals that have accessed the wireless network; a mobile terminal, used as a master, searches for an authorized mobile terminal through the task server; selects the authorized mobile terminal as a client mobile terminal; and issues a control request to the selected client mobile terminal. The master mobile terminal controls the selected client mobile terminal according to the control acceptance information returned by the selected client mobile terminal. The work flow is specifically illustrated below.

Step 101, logging into the task server. The mobile terminal accesses the wireless communication network by means of 3G or Wi-Fi. The master mobile terminal runs a remote desktop client program, enters a user name and a password, and requests to log into the task server. After being approved by the task server, the remote desktop client successfully logs into the task server.

Step 102, searching for an authorized user and saving this user in an authorized user list. The remote desktop client of the master mobile terminal periodically sends a request for searching for a controllable user to the task server. After receiving the search request, the task server searches for the controllable user and sends information on the searched controllable user to the master mobile terminal. The remote desktop client of the master mobile terminal receives the information on the controllable user and saves it in a controllable user list.

Step 103, selecting a controllable client mobile terminal. The remote desktop client of the master mobile terminal displays an authorized controllable user list. The user selects a certain mobile terminal, or several mobile terminals, from the authorized user list and issues a control request for controlling the certain, or several, client mobile terminals to the task server. The task server forwards the control request to the selected client mobile terminal.

Step S104, the client mobile terminal decides whether to accept the request of being controlled. After receiving the control request of the master mobile terminal forwarded by the task server, the client mobile terminal decides whether to accept being controlled, and notifies the master mobile terminal through the task server. If the client mobile terminal accepts the request of being controlled, a handshake between the client mobile terminal succeeds and the master mobile terminal thereby establishes a remote desktop connection between the terminals. The master mobile terminal then takes over the client mobile terminal and performs step 105; otherwise, the master mobile terminal performs step 103.

Step S105, the master mobile terminal controls the client mobile terminal. After the handshake is successfully made between the client mobile terminal and the master mobile terminal, image information of a display device is compressed and sent to the master mobile terminal through the task server. The remote desktop client of the master mobile terminal decompresses and displays the image information. The control information is then sent to the client mobile terminal through the task server. The remote desktop client of the client mobile terminal invokes an application programming interface (API) recognizable by a specific operating system according to the control information, and sends the image information of the display device to the master mobile terminal through the task server.

Step 106: the master mobile terminal and the client mobile terminal may terminate communication at any time. When the client mobile terminal actively terminates the remote desktop connection, the master mobile terminal performs step 103, and the client mobile terminal disconnects from the task server. When the master mobile terminal terminates the remote desktop connection, the master mobile terminal and the client mobile terminal disconnect from the task server.

As can be seen from the workflow illustrated above, the remote terminal assistance solution in current systems has the following disadvantages. First, the terminal device has to consume its own resources to invoke the API that is recognizable by the specific operating system to achieve the goal of remote assistance, thus increasing the burden of the terminal device.

Additionally, the loading of the terminal device is relatively heavy. The terminal device has to obtain the controllable user information by periodically sending, to the task server, a request for searching for the controllable user. In addition, the user information has to be saved in a local controllable user list. This requires the terminal device to allocate additional resources to carry out a polling request to the task server and allocate additional storage spaces to store the controllable user information, which will burden the terminal device even more, thereby affecting its working performance. This is especially the case for mobile terminal devices with limited resource spaces.

Furthermore, the controlled terminal device cannot actively perform verification and authorization on the remotely-assisted master terminal device. When the remote assistance connection needs to be reestablished, the verified master terminal device cannot quickly establish the connection with the controlled terminal device, thereby leading to a poor user experience.

No effective solutions have been proposed to remedy these deficiencies.

CN101035043 discusses a method for remotely assisting other network users through network packet control input.

US 2014/0309812 discusses a method of allowing a local Driving Assistance Service (DAS) center within a base station to provide a DAS to a vehicle by using a communication network.

### BRIEF SUMMARY

Various aspects and embodiments of the invention are set out in the appended claims.

Embodiments of the disclosure provide a method, an apparatus, and a system for terminal remote assistance, so as to at least solve the technical problem of a heavier burden caused by a terminal device having to consume its own operating resources to achieve the goal of remote assistance.

According to one example, a method for providing remote terminal assistance is provided, comprising: sending, by a task server to a second terminal, a current status of a first terminal, wherein the current status is a status of a local application, located in the first terminal, in need of an assistance operation performed by the second terminal; receiving, by the task server, an assistance operation instruction, sent by the second terminal, that corresponds to the current status; performing, by the task server, the assistance operation on the current status based on the assistance operation instruction to obtain assistance operation results; and sending, by the task server to the first terminal, the assistance operation results.

In another example, a method for providing remote terminal assistance is provided, comprising: uploading, by the first terminal to a task server, a current status of a local application in need of an assistance operation performed by the second terminal; receiving, by the first terminal, assistance operation results obtained by the task server performing the assistance operation on the current status based on an assistance operation instruction from the second terminal, wherein the assistance operation results are used to reflect the assistance operation performed by the second terminal on the first terminal.

In another example, a method for providing remote terminal assistance is provided, comprising: receiving, by a second terminal, a current status of a first terminal of a task server, wherein the current status is a current status of a local application, located in the first terminal, in need of an assistance operation performed by the second terminal; and sending, by the second terminal to the task server, an assistance operation instruction corresponding to the current status, wherein the assistance operation instruction is used for instructing the task server to perform the assistance operation on the current status to obtain assistance operation results.

In another example, an apparatus for terminal remote assistance is further provided, comprising: a first sending module, configured to send a current status of a first terminal to a second terminal, wherein the current status is a status of a local application, located in the first terminal, in need of an assistance operation performed by the second terminal; a first receiving module, configured to receive an assistance operation instruction, sent by the second terminal, that corresponds to the current status; an assistance module, configured to perform the assistance operation on the current status based on the assistance operation instruction to obtain assistance operation results; and a second sending module, configured to send the assistance operation results to the first terminal.

In another example, an apparatus for terminal remote assistance is further provided, comprising: an uploading module, configured to send to a task server, a current status of a local application in need of an assistance operation performed by the second terminal; and a receiving module, configured to receive assistance operation results of the task server performing the assistance operation on the current status based on an assistance operation instruction from the second terminal, wherein the assistance operation results are used to reflect the assistance operation performed by the second terminal on the first terminal.

In another example, an apparatus for terminal remote assistance is further provided, comprising: a receiving module, configured to receive a current status of a first terminal of a task server, wherein the current status is a current status of a local application, located in the first terminal, in need of an assistance operation performed by the second terminal; and a first sending module, configured to send to the task server, an assistance operation instruction corresponding to the current status, wherein the assistance operation instruction is used for instructing the task server to perform the assistance operation on the current status to obtain assistance operation results.

In another example, a system for terminal remote assistance is further provided, comprising: a first terminal, a task server, and a second terminal; the first terminal is configured to send a current status of the first terminal to the task server, wherein the current status is a status of a local application, located in the first terminal, in need of an assistance operation performed by the second terminal; the task server is configured to send the current status to the second terminal; receive an assistance operation instruction, sent by the second terminal, that corresponds to the current status; perform the assistance operation on the current status based on the assistance operation instruction; and send obtained assistance operation results to the first terminal; and the second terminal is configured to receive the current status; and send to the task server the assistance operation instruction that corresponds to the current status.

In the disclosed embodiments, the objective of reducing the burden of a terminal device is achieved. The objective is achieved by adopting the method in which the task server performs the assistance operation on the current status based on the assistance operation instruction, sent by the second terminal that corresponds to the current status of the first terminal; and sends the assistance operation results to the first terminal. Such a method solves the technical problem of a heavier burden caused by the terminal device having to consume its own operating resources to achieve the goal of providing remote assistance.

### BRIEF DESCRIPTION OF THE DRAWINGS

The accompanying drawings illustrated herein are to provide a further understanding of the disclosed embodiments and constitute a part of the disclosure. Illustrative embodiments of the disclosure and their descriptions are intended to explain the disclosed embodiments rather than unduly limit the embodiments.
FIG. 1 is a hardware diagram of a computer terminal implementing a method for providing remote terminal assistance according some embodiments of the disclosure.
FIG. 2 is a flow diagram of a method for providing remote terminal assistance according to some embodiments of the disclosure.
FIG. 3 is a flow diagram of a method for establishing a mapping relationship according to some embodiments of the disclosure.
FIG. 4 is a flow diagram of a method for establishing a mapping relationship according to some embodiments of the disclosure.
FIG. 5 is a block diagram of an apparatus for terminal remote assistance according to some embodiments of the disclosure.
FIG. 6 is a block diagram of an apparatus for terminal remote assistance according to some embodiments of the disclosure.
FIG. 7 is a block diagram of an apparatus for terminal remote assistance according to some embodiments of the disclosure.
FIG. 8 is a block diagram of an apparatus for terminal remote assistance according to some embodiments of the disclosure.
FIG. 9 is a block diagram of an apparatus for terminal remote assistance according to some embodiments of the disclosure.
FIG. 10 is a flow diagram of a method for providing remote terminal assistance according to some embodiments of the disclosure.
FIG. 11 is a block diagram of an apparatus for terminal remote assistance according to some embodiments of the disclosure.
FIG. 12 is a block diagram of an apparatus for terminal remote assistance according to some embodiments of the disclosure.
FIG. 13 is a flow diagram of a method for providing remote terminal assistance according to some embodiments of the disclosure.
FIG. 14 is a block diagram of an alternative apparatus for terminal remote assistance according to some embodiments of the disclosure.
FIG. 15 is a block diagram of an apparatus for terminal remote assistance according to some embodiments of the disclosure.
FIG. 16 is a block diagram of a system for terminal remote assistance according to some embodiments of the disclosure.
FIG. 17 is a block diagram of a system for terminal remote assistance according to some embodiments of the disclosure.

### DETAILED DESCRIPTION

In order to enable those skilled in the art to better understand the embodiments of the disclosure, the technical solutions in the embodiments will be described clearly and completely below with reference to the accompanying drawings in the embodiments of the disclosure. It is apparent that the described embodiments are merely some, rather than all, of the embodiments of the disclosure. On the basis of the disclosed embodiments, all other embodiments obtained by those of ordinary skill in the art without making creative efforts shall fall within the scope of the disclosure. The following embodiments are disclosed in groups; however the grouping is not intended to limit the scope of the disclosure and is presented merely to organize the following disclosure of each embodiment.

It is to be noted that terms "first", "second" and the like in the specification and claims of the disclosure and the accompanying drawings introduced above are used for distinguishing similar objects from each other; they are not necessarily used for describing a particular order or sequence. It is to be understood that data used in this way is interchangeable where appropriate, so that the embodiments of the disclosure described herein can be carried out in sequences other than the ones illustrated or described herein. Moreover, terms "comprising", "having," and any variations thereof are intended to cover non-exclusive inclusions, for example, processes, methods, systems, products or devices that comprise a series of steps or units are not necessarily limited to those steps or units clearly listed, but may include other steps or units that are not clearly listed or inherent to these processes, methods, products, or devices.

### Embodiment 1

According to one embodiment, a method for providing remote terminal assistance is provided. It is noted that steps shown in the flow diagram of the accompanying drawings may be performed in a computer system such as a set of computer-executable instructions. Moreover, although logical sequences are shown in the flow diagram, in some cases, the steps shown or described may be performed in different sequences from those described herein.

The method embodiment provided by Embodiment 1 may be executed in a mobile terminal, a computer terminal, or similar apparatuses. Description of the method is provided below using execution in a computer terminal as a non-limiting example.

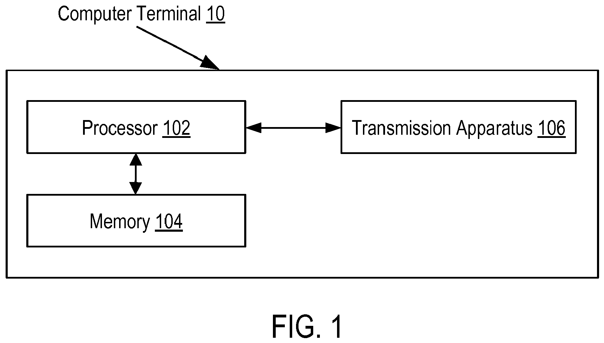

FIG. 1 is a hardware diagram of a computer terminal implementing a method for providing remote terminal assistance according some embodiments of the disclosure.

As shown in FIG. 1, a computer terminal 10 may include one or more (only one is shown in the figure) processors 102. The processor 102 may include, but is not limited to, a processing apparatus such as a microprocessor (e.g., CPU) or a programmable logic device (e.g., FPGA). The terminal 10 further includes a non-transitory memory 104 for storing data (e.g., computer-executable instructions), and a transmission apparatus 106 for providing communication functionality. It can be understood by those of ordinary skill in the art that the structure shown in FIG. 1 is merely illustrative and should not be construed as limiting the structure of the electronic apparatus described above. For example, the computer terminal 10 may also include more or fewer components than those shown in FIG. 1, or have a different configuration from that shown in FIG. 1.

The memory 104 may be used to store software programs and modules of application software, such as program instructions/modules corresponding to the methods for providing remote terminal assistance in the disclosed embodiments. The processor 102 runs the software programs and modules stored in the memory 104 to execute various applications and perform various data processing operations, i.e., to achieve the goal of providing the disclosed methods for detecting vulnerabilities of the applications. The memory 104 may include high-speed random-access memory (RAM) devices, and may also include non-volatile memories such as one or more magnetic storage devices, flash memories, or other non-volatile solid state memories. In some instances, the memory 104 may further include memories that are provided remotely with respect to the processor 102; such remote memories may be connected to the computer terminal 10 via a network. Examples of the network include, but are not limited to, the Internet, an Intranet, a local area network (LAN), a mobile communications network, and combinations thereof.

The transmission apparatus 106 is used to receive or send data via a network. A specific example of the above-described network may include a wireless network provided by a communication provider of the computer terminal 10. In one example, the transmission apparatus 106 includes a Network Interface Controller (NIC) that can communicate with the Internet by connecting with other network devices through a base station. In one example, the transmission device 106 may be a Radio Frequency (RF) module used for wireless communication with the Internet.

It can be understood by those of ordinary skill in the art that the structure shown in FIG. 1 is merely illustrative and that the computer terminal may also be a smart phone (e.g., an ANDROID phone, an IOS phone, etc.), a tablet PC, a palmtop computer, or a Mobile Internet Device (MID), a personal digital assistant (PDA), and other terminal devices. FIG. 1 is not intended limit the structure of the electronic apparatus described above. For example, the computer terminal 10 may also include more or fewer components (e.g., network interfaces, display devices, etc.) than those shown in FIG. 1, or have a different configuration from that shown in FIG. 1.

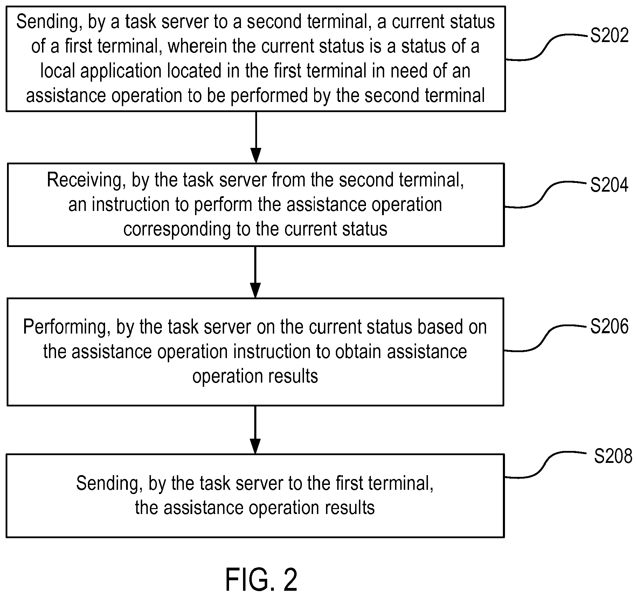

In the above-described runtime environment, the disclosure provides a method for providing remote terminal assistance as shown in FIG. 2. A task server described in the following embodiments may adopt the hardware of the above-described computer terminal illustrated in FIG. 1.

FIG. 2 is a flow diagram of a method for providing remote terminal assistance according to some embodiments of the disclosure. As shown in FIG. 2, a method for providing remote terminal assistance provided by the illustrated embodiment comprises steps S202 to S208, described below.

**Step S202:** a task server sends a current status of a first terminal to a second terminal, wherein the current status is a status of a local application located in the first terminal in need of an assistance operation to be performed by the second terminal.

In alternative embodiments, before the task server sends the current status of the first terminal to the second terminal, the current status may be acquired first. For example, the current status may be acquired in real-time from the first terminal, and may also be acquired from a third party device. In one embodiment, the current status may also be acquired from a local database. In this embodiment, the task server transmits an upload request to the first terminal and receives and saves the current status uploaded by the first terminal based on the upload request. In the embodiment where the current status is acquired from a local database, a storage space (which is also referred to as an operation result pool) dedicated for storage of the status of the first terminal may be created by the task server

The second terminal further needs to log into the task server to perform subsequent processing after the task server receives the current status uploaded by the first terminal based on the upload request, in order to reduce the burden of the terminal device and to improve the efficiency of remote assistance. In an alternative embodiment, logging into the task server may be performed in the following manner, but is not limited thereto. The task server first receives a login request sent by the second terminal, wherein the login request includes an identity token pre-delivered by the task server to the second terminal. The task server then verifies the identity token, wherein the current status of the first terminal is sent to the second terminal after the identity token is verified. As such, the remote assistance implementing terminal (i.e., the second terminal) only needs to save token information that is already authorized by a controlled terminal without requiring the implementing terminal device to actively and periodically request information of the controlled terminal to the task server. Additionally, the remote assistance implementing terminal may allocate additional storage spaces for saving information of a controllable user, especially for a mobile terminal device with limited resource spaces, which can effectively reduce the additional load and optimize its performance.

It should be noted that the current status may comprise local operation results of the first terminal, such as current operation results for the local application.

Alternatively, or in conjunction with the foregoing, generating the current status includes, but is not limited to, one of: utilizing local JavaScript computation results and local desktop image information. Specifically, in the case where the remote assistance is based on a web application, the current status may be generated based on local JavaScript computation results. In the case where the remote assistance is based on a remote client application, the current status may be generated based on information of a captured local desktop image.

**Step S204:** the task server receives an assistance operation instruction, sent by the second terminal, to performance an assistance operation that corresponds to the current status. As such, the second terminal only needs to send a control instruction (i.e., the assistance operation instruction) to the task server and the specific assistance operation may be processed by the task server. Please refer to steps S206 and S208 for details, as repeated descriptions are omitted herein

**Step S206**: the task server performs the assistance operation on the current status based on the assistance operation instruction to obtain assistance operation results.

**Step S208**: the task server sends the assistance operation results to the first terminal, thereby achieving the goal of the second terminal performing the remote assistance operation on the first terminal.

By performing each of the processing steps, the operating burden of the terminal device can be effectively reduced because the assistance operation that is completed at a terminal device is transferred to the task server.

In current systems, the terminal device has to obtain controllable user information by periodically sending, to the task server, a request to search for a controllable user; and the user information must be saved in a local controllable user list. This requires the terminal device to allocate additional resources to carry out a polling request against the task server. In an alternative embodiment, in order to save the operating resources of the terminal, some operations of the remote terminal assistance may be performed only when a remote assistance demand exists in the terminal. For example, the task server may receive an assistance request from the first terminal before the task server sends the current status of the first terminal to the second terminal, wherein the assistance request is used for requesting the second terminal to provide the remote assistance to the current status. It is to be illustrated that the processing process may be performed at any moment before the task server sends the current status of the first terminal to the second terminal. For example, the processing process may also be performed before the task server sends to the first terminal the upload request for requesting the first terminal to upload the current status, but it is not limited thereto.

Moreover, in the related art, the controlled terminal device cannot actively perform verification and authorization on a remotely-assisted master terminal device. When remote assistance connection needs to be reestablished, the authorized master terminal device cannot quickly establish the connection with the controlled terminal device, thereby leading to a bad user experience. In order to solve the technical problem, a method for providing remote terminal assistance provided by the disclosed embodiments may be implemented by establishing a mapping relationship between a master terminal and a controlled terminal on a task server; that is to say, when the first terminal sends the assistance request, the task server only needs to query (or determine the presence of) a mapping relationship between a first identifier of the first terminal and a second identifier of the second terminal carried in the assistance request.

There may be many different methods for determining the mapping relationship. For example, the mapping relationship may be initiated or established by the first or second terminal; or may be acquired by the task server from a third party; or may be pre-configured directly by a user. The process of the first terminal actively initiating and establishing the mapping relationship may be embodied as follows: First, the task server receives, from the first terminal, a binding request for establishing the mapping relationship; the task server sends the binding request to the second terminal. Next, the task server receives notification information sent by the second terminal and used for instructing that establishing the mapping relationship is permitted, and establishes the mapping relationship after receiving the notification information.

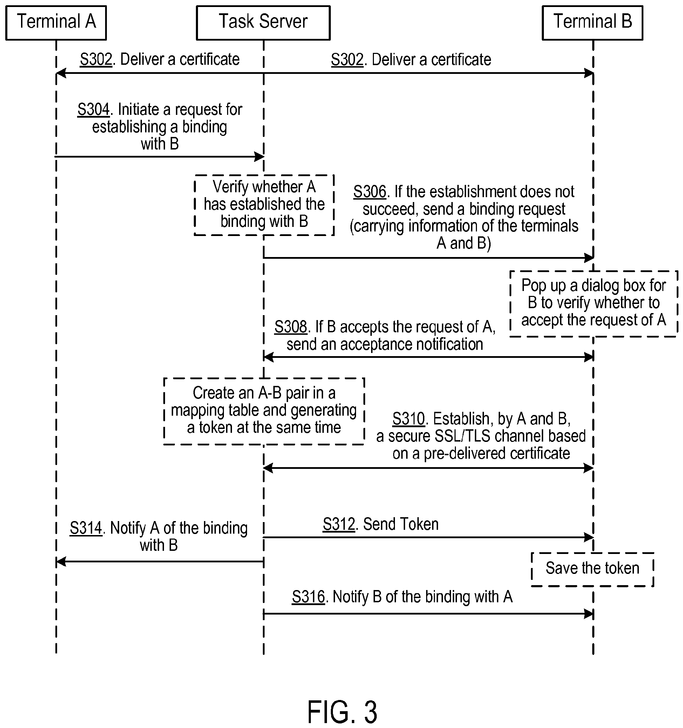

In order to better understand the process of establishing a mapping relationship, detailed descriptions are provided below in conjunction with FIG. 3 and a specific application scenario. In the following embodiment, the first terminal is referred to as terminal A for identifying a remote-assistance controlled terminal device and the second terminal is referred to as terminal B for identifying a remote-assistance implementing terminal device.

FIG. 3 is a flow diagram of a method for establishing a mapping relationship according to some embodiments of the disclosure. As shown in FIG. 3, the method comprises the following steps.

**Step S302:** an initialization stage is performed. When terminal A and terminal B register with the task server for the first time, the task server pre-delivers corresponding certificates to terminal A and terminal B, respectively. The certificates will be used for establishing SSL/TLS secure channels between terminal A and the task server, and between terminal B and the task server.

**Step S304**: terminal A initiates a request for establishing a binding with terminal B. When terminal A wishes to establish a mapping relationship of remote assistance with terminal B on the task server, terminal A will send a binding establishment request to the task server, wherein the request content includes, but is not limited to, identity information of terminal B (e.g., account information, an MAC address of the terminal device, etc.). The task server may verify whether terminal A and terminal B have established the mapping relationship after receiving the request; and if the mapping relationship is not established, the process proceeds to step S306.

**Step S306,** the task server transmits a binding request to terminal B. When the task server determines that the mapping relationship is not yet established between terminal A and terminal B, the task server will send the binding request to terminal B. The request content includes, but is not limited to, identity information of terminal A and terminal B (e.g., account information, MAC addresses of the terminal devices, etc.). After terminal B receives the request, a dialog box pops up to request the user of terminal B to verify whether to accept the binding request of terminal A. If the user accepts the request, the process proceeds to step S308.

**Step S308,** the terminal device B sends a binding acceptance notification to the task server. If terminal B performs the binding with terminal A, terminal B will send the acceptance notification to the task server. After receiving the notification, the business sever will establish an A-B mapping relationship in a local mapping table and save it in a local storage space. At the same time, a token is generated by means of an *F*(*x*, *y*, *z*) function, wherein *x*, *y*, and *z* respectively represent identity information of terminal A, identity information of terminal B, and a random number. The identity information refers to information such as the account information, the MAC address of the terminal device, and the like which can identify a terminal device identity. The *F* function may be, but is not limited to, an existing hash function.

**Step S310**, the task server establishes a secure channel with terminal B. After the task server generates the token based on terminal A and terminal B, the task server and the terminal device B use the certificate pre-delivered in step S302 to establish the secure channel.

**Step S312**, the task server transmits the token to terminal B. By using the secure channel established in step S310, the task server delivers the token to the terminal device B. Thereafter, when terminal A applies for remote assistance from terminal B, the token is used for terminal B to verify its identity to the task server. After receiving the token, terminal B saves the token in the local storage space.

**Step S314**, the task server notifies terminal A of the successful binding. After terminal A establishes the mapping relationship with terminal B, terminal A may then apply for remote assistance from terminal B.

**Step S316**, the task server notifies terminal B of the successful binding; after terminal A establishes the mapping relationship with terminal B, terminal A may then apply for remote assistance from terminal B.

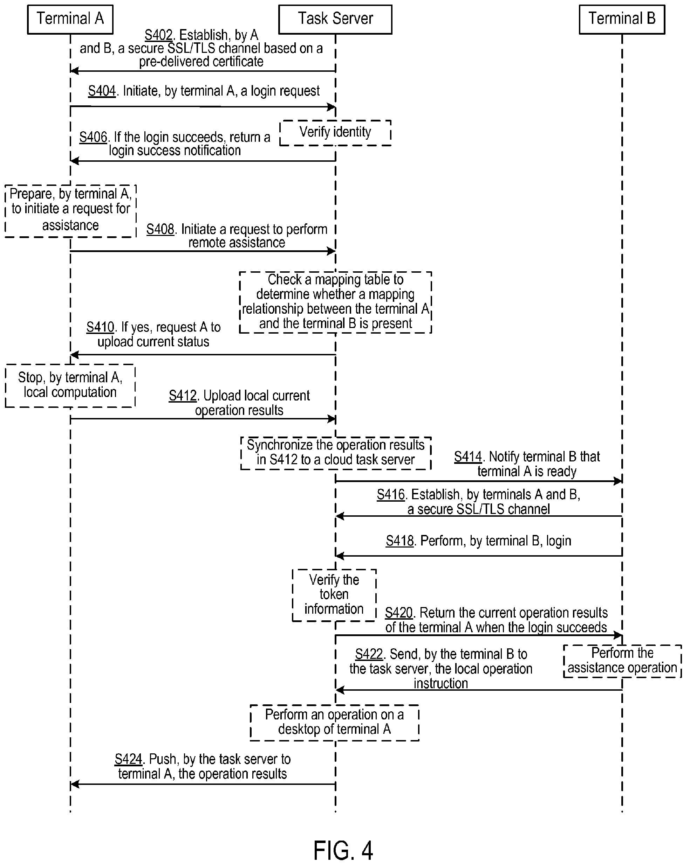

Based on the application scenario, a method for providing remote terminal assistance provided by an alternative embodiment of the disclosure may be implemented through the flow diagram illustrated in FIG. 4.

FIG. 4 is a flow diagram of a method for establishing a mapping relationship according to some embodiments of the disclosure.

**Step S402,** the task server establishes a secure channel with terminal A. When terminal A wishes to log into the task server, the task server and the terminal device A use the pre-delivered certificate to establish the secure channel between the task server and terminal A.

**Step S404,** terminal A initiates a login request to the task server. By using the secure channel established in step S402, terminal A sends a request to log into the task server. The request content includes, but is not limited to, the identity information of terminal A (e.g., the account information, the MAC address of the terminal device, etc.). After receiving the login request, the task server verifies the identity information of terminal A. If the verification is successful, the process proceeds to step 406.

**Step S406**, the task server returns a notification of successful login to terminal A. After receiving the notification of successful login, terminal A prepares to initiate the remote assistance request.

**Step S408**, terminal A initiates the remote assistance request to the task server. The request content includes, but is not limited to, the account information of terminal A and the account information of terminal B. The account information of terminal B may be inputted by a user and may also be locally cached in terminal A. After receiving the request, the task server queries the local mapping table and determines whether the mapping relationship between terminal A and terminal B exists; if so, the process proceeds to step S410.

**Step S410**, the task server sends, to terminal A, a request to upload the current status. If it is determined that the mapping relationship between terminal A and terminal B exists, the task server requests terminal A to stop current operation computations and to upload its current operation results to the task server at the same time. After receiving the request, terminal A stops local operation computations and captures local operation results. In the case where the remote assistance is based on a web application, the operation results include, but are not limited to, the local JavaScript computation results. In the case where the remote assistance is based on a remote client application, the operation results include, but are not limited to, the local desktop image information. If terminal A successfully captures the local current operation results, the process proceeds to step S412.

**Step S412**, terminal A uploads the local current operation results to the task server. After receiving the operation results, the task server synchronizes the operation results to a local terminal A operation result pool. The terminal A operation result pool is a separate storage space that is locally allocated by the task server for maintaining the operation results of terminal A. If the synchronization succeeds, the process proceeds to step S414.

**Step S414**, the task server notifies terminal B that terminal A is ready. This message notifies terminal B that terminal A is ready, and terminal A may start to accept the remote assistance.

**Step S416**, the task server establishes the secure channel with terminal B. After the task server notifies terminal B that terminal A is ready, the task server and the terminal device B use the pre-delivered certificate to establish the secure channel there between.

**Step S418**, terminal B initiates a login request to the task server. By using the secure channel established in step S416, terminal B sends a request to log into the task server. The request content includes the token delivered by the task server to terminal B during establishment of the remote assistance mapping relationship between the devices and the identity information of terminal B (e.g., the account information, the MAC address of the terminal device, etc.). After receiving the login request, the task server verifies the token of terminal B. If verified, the process proceeds to step 420.

**Step S420,** the task server returns a notification of a successful login to terminal B, and at the same time, sends the current operation results of terminal A that are saved in the task server to terminal B. After receiving the message, terminal B starts to provide the remote assistance to terminal A.

**Step S422,** terminal B displays the received current operation results of terminal A and sends information of the assistance operation instruction to the task server. After receiving the operation result instruction information from terminal B, the task server performs an operation computation of terminal A in the terminal A operation result pool.

**Step S424,** the task server pushes the operation results to terminal A so as to achieve the goal of terminal B performing the remote assistance operation on terminal A.

It should be noted that in order to briefly describe each of the foregoing method embodiments, all the method embodiments are expressed as a combination of a series of actions. However, those skilled in the art should know that the disclosed embodiments are not limited by the described sequence of the actions as certain steps can be carried out in other sequences or at the same time according to the disclosed embodiments. Secondly, those skilled in the art should also know that all the embodiments described in the specification are exemplary embodiments; and the actions and modules involved are not necessarily needed for the disclosed embodiments.

Through the preceding description of the embodiments, those skilled in the art can clearly understand that the method according to the aforementioned embodiments may be implemented by means of software and a necessary general hardware platform, and certainly may also be implemented by hardware. In most cases, however, the former implementation is a preferred implementation. Based on such understanding, the essence or a part of the technical solutions of the disclosure that contribute to the prior art may be embodied in the form of a software product. The computer software product is stored in a storage medium (e.g., ROM/RAM, magnetic disks, and optical disks) and includes several instructions for enabling a terminal device (which may be a mobile phone, a computer, a server, a network device, etc.) to perform the methods described in each of the embodiments of the disclosure.

The embodiments may achieve the goal of one terminal device actively requesting another terminal device to provide remote assistance. In the embodiments, a mapping relationship between a remote-assistance controlled terminal and a remote-assistance implementing terminal is established at a task server to achieve the goals of having quick and safe verification and connection performed by the remote-assistance controlled terminal on the remote-assistance implementing terminal. Such a mapping relationship reduces complexity of the verification, enhances connection safety, and may achieve the goal of cross-platform and cross-browser remote assistance and remote management between terminal devices, thereby enabling a better user experience.

### Embodiment 2

According to another embodiment, an apparatus for terminal remote assistance is further provided, wherein the apparatus may be applied in a task server for implementing the methods for providing remote terminal assistance. The task server in this embodiment may comprise a computer terminal illustrated in Embodiment I (FIGS. 1 through 4).

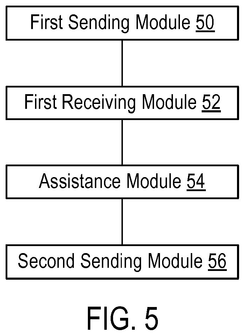

FIG. 5 is a block diagram of an apparatus for terminal remote assistance according to some embodiments of the disclosure.

The apparatus of FIG. 5 includes a first sending module 50, configured to send a current status of a first terminal to a second terminal wherein the current status is a status of a local application, located in the first terminal, in need of an assistance operation performed by the second terminal.

The apparatus of FIG. 5 includes a first receiving module 52, configured to receive an assistance operation instruction, sent by the second terminal that corresponds to the current status.

The apparatus of FIG. 5 includes an assistance module 51 connected to the first receiving module 52, configured to perform the assistance operation on the current status based on the assistance operation instruction to obtain assistance operation results.

The apparatus of FIG. 5 includes a second sending module 56 connected to the assistance module 54, configured to send the assistance operation results to the first terminal.

Functions implemented through each of the illustrated modules may also effectively reduce the operating burden of the terminal device.

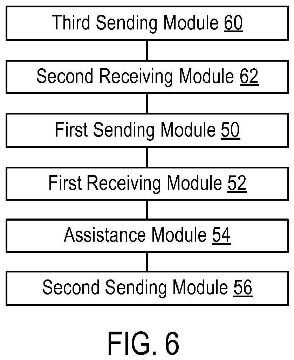

Alternatively, as shown in FIG. 6, the apparatus for terminal remote assistance provided in an alternative embodiment may also comprise: a third sending module 60, configured to send an upload request to the first terminal; and a second receiving module 62 connected to the first sending module 50, configured to receive and save the current status uploaded by the first terminal based on the upload request.

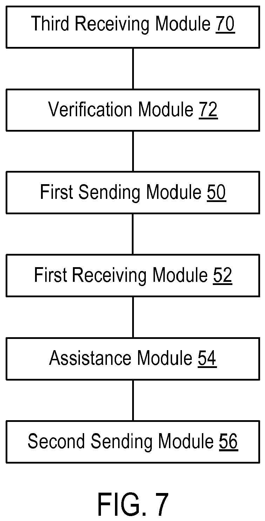

Moreover, in the embodiment, as shown in FIG. 7, the apparatus may further comprise: a third receiving module 70, configured to receive a login request sent by the second terminal, wherein the login request includes an identity token pre-delivered by the task server to the second terminal; and a verification module 72 connected to the third receiving module 70, configured to verify the identity token; the current status of the first terminal is sent to the second terminal after the identity token is verified.

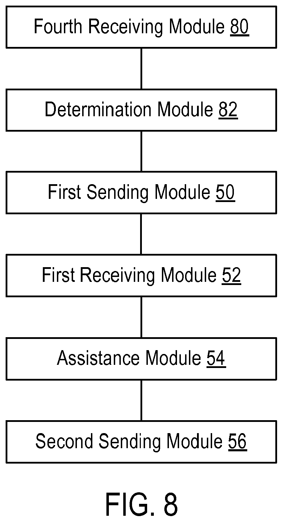

Alternatively, as shown in FIG. 8, the apparatus for terminal remote assistance provided by the embodiment may further comprise: a fourth receiving module 80, configured to receive an assistance request from the first terminal, wherein the assistance request is used for requesting the second terminal to provide remote assistance to the current status. Correspondingly, a third receiving module 80 is used to receive the assistance request including the following information: a first identifier of the first terminal and a second identifier of the second terminal. Furthermore, as shown in FIG. 8, the apparatus may further comprise: a determination module 82 connected to the fourth receiving module 80, configured to determine a presence of a mapping relationship between the first identifier and the second identifier.

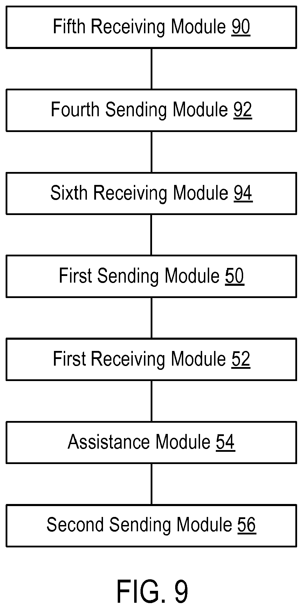

In an alternative solution of the embodiment, as shown in FIG. 9, the apparatus for terminal remote assistance provided by the embodiment may further comprise: a fifth receiving module 90, configured to receive, from the first terminal, a binding request for establishing the mapping relationship; a fourth sending module 92 connected to the fifth receiving module 90, configured to send the binding request to the second terminal; and a sixth receiving module 94 connected to the fourth sending module 92, configured to receive notification information sent by the second terminal and used for instructing that establishing the mapping relationship is permitted, and establish the mapping relationship after receiving the notification information.

As such, the establishment of the mapping relationship between the first terminal and the second terminal is accomplished. The solution in current systems, whereby a terminal needs to perform periodical polling, is replaced by determining whether a mapping relationship is present in the task server, which saves operating resources of the terminal and reduces its operating burden.

It should be noted that various modules involved in the embodiment can be implemented through software or hardware. The hardware may be implemented in the following manner, but is not limited thereto: the various modules are respectively located in a separate processor, the various modules are all located in the same processor, or the various modules are located in different processors and in any combination.

It should be noted that reference can be made to related descriptions of Embodiment 1 (FIGS. 1 through 4) for the alternative implementation of the apparatus for terminal remote assistance provided by the embodiment; therefore, details will not be repeated herein

### Embodiment 3

The disclosure further provides alternative methods for providing remote terminal assistance. In the following embodiments, the involved terminal may be a mobile terminal (e.g., a mobile phone, a tablet PC, etc.), or may also be other types of terminals. The operating system running on the terminal may also be a variety of different systems, for example, the widely used ANDROID system, a WINDOWS operating system, an IOS system, or the like, but it is not limited thereto. Moreover, a server in the following embodiments may be one server or a set of servers, and may also be a cloud server, and the like. This server may be deployed according to different requirements. Modules involved in the following embodiment may function as software. These modules may be integrated in software for implementation and may also be implemented on different software.

The methods described below may be executed in a second terminal and this terminal may adopt the hardware structure of the computer terminal shown in FIG. 1, but is not limited thereto.

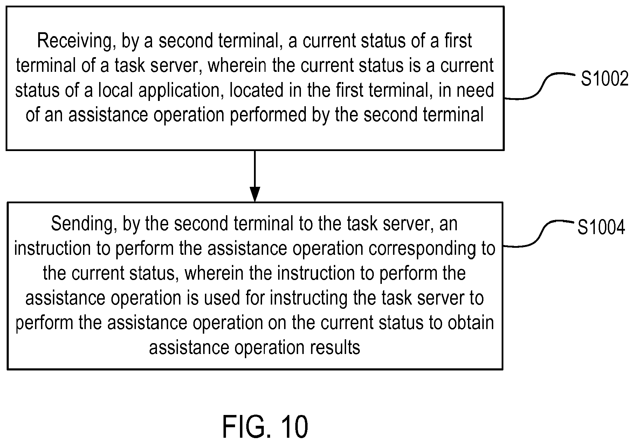

FIG. 10 is a flow diagram of a method for providing remote terminal assistance according to some embodiments of the disclosure.

**Step S1002,** a second terminal receives a current status of a first terminal of a task server, wherein the current status is a current status of a local application, located in the first terminal, in need of an assistance operation performed by the second terminal.

Alternatively, in order to improve efficiency, before the second terminal receives the current status of the first terminal of the task server, a login request, sent by the second terminal to the task server, includes an identity token of the second terminal. The identity token is used to provide a verification basis for the task server to verify the second terminal.

**Step S1004,** the second terminal sends an assistance operation instruction corresponding to the current status to the task server, wherein the assistance operation instruction is used for instructing the task server to perform the assistance operation on the current status to obtain assistance operation results.

It should be noted that reference can be made to related descriptions of Embodiment 1 (FIGS. 1 through 4) for other alternative implementations in the embodiment; therefore, details will not be repeated herein

It can be understood by those of ordinary skill in the art that all or some of the steps of various methods of the embodiments may be accomplished by instructing hardware associated with the terminal device through programs. The programs may be stored in a computer-readable storage medium, which may include a flash memory, a read-only memory (ROM), a random access memory (RAM), a disk or a CD-ROM, and the like.

### Embodiment 4

According to another embodiment, an apparatus for terminal remote assistance is further provided. The apparatus may be applied in a first terminal for implementing the methods described in Embodiment 3 (FIG. 10).

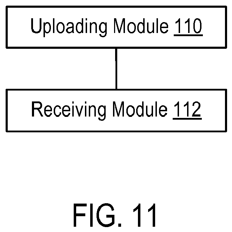

FIG. 11 is a block diagram of an apparatus for terminal remote assistance according to some embodiments of the disclosure.

The apparatus in FIG. 11 includes an uploading module 110, configured to upload to a task server a current status of a local application requesting a second terminal to perform an assistance operation; alternatively, the uploading module 110 may further comprise the following processing units: a receiving unit 1100, configured to receive an upload request from the task server; and an uploading unit 1102, configured to upload the current status to the task server under the triggering of the upload request.

The apparatus in FIG. 11 includes a receiving module 112 connected to the uploading module 110, configured to receive assistance operation results obtained by the task server performing the assistance operation on the current status based on an assistance operation instruction from the second terminal, wherein the assistance operation results are used to reflect the assistance operation performed by the second terminal on the first terminal.

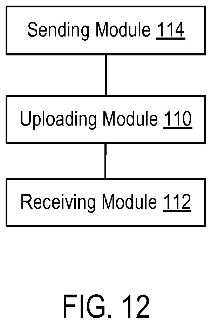

Alternatively, or in conjunction with the foregoing, as shown in FIG. 12, the apparatus for terminal remote assistance provided by the embodiment may further includes a sending module 114, configured to send to the task server an assistance request for requesting the second terminal to provide remote assistance to the current status.

It should be noted that various modules involved in the preceding embodiments can be implemented through software or hardware. The hardware may be implemented in the following manner, but is not limited thereto: the various modules are respectively located in a separate processor, the various modules are all located in the same processor, or the various modules are located in different processors and in any combination.

It should be noted that reference can be made to related descriptions of **Embodiment 1** (FIGS. 1-4) for alternative implementations of the apparatus for terminal remote assistance provided by the embodiment; therefore, details will not be repeated herein

### Embodiment 5

Another embodiment further provides an alternative method for providing remote terminal assistance. Steps shown in the flow diagrams of the figures may be performed in a computer system such as a set of computer-executable instructions. Moreover, although logical sequences are shown in the flow diagrams, in some cases the steps shown or described may be performed in different sequences from those described herein.

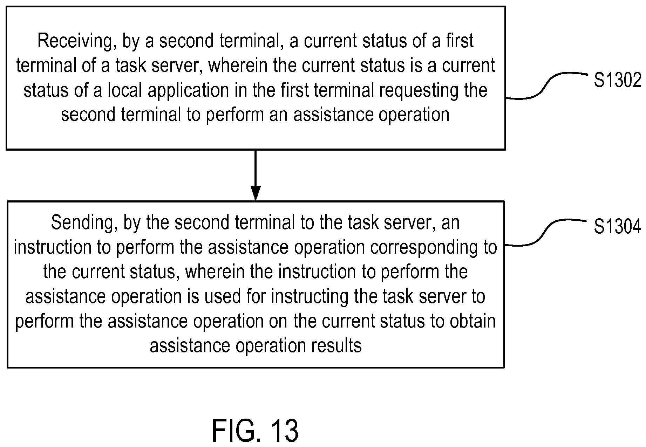

The method of FIG. 13 may be executed in a second terminal. This terminal may adopt the hardware structure of the computer terminal shown in FIG. 1, but is not limited thereto.

FIG. 13 is a flow diagram of a method for providing remote terminal assistance according to some embodiments of the disclosure.

**Step S1302,** a second terminal receives a current status of a first terminal of a task server, wherein the current status is a current status of a local application, located in the first terminal, in need of an assistance operation performed by the second terminal.

**Step S1304,** the second terminal sends to the task server, an assistance operation instruction corresponding to the current status, wherein the assistance operation instruction is used for instructing the task server to perform the assistance operation on the current status to obtain assistance operation results.

In order to improve the efficiency of remote assistance, before receiving the current status of the first terminal of the task server, the second terminal sends a login request including an identity token of the second terminal to the task server, the identity token being used to provide a verification basis for the task server to verify the second terminal. That is to say, after the server performs the verification on the identity token of the second terminal, it may be considered that it is verified and subsequent processing processes may be then performed. For example, the task server returns a notification of successful login to the second terminal, and sends the current status of the first terminal to the second terminal at the same time. Subsequently, the second terminal will send a control instruction for the status to the task server. The task server then performs a maintenance operation and finally pushes operation results to the first terminal.

### Embodiment 6

According to another embodiment, an apparatus for terminal remote assistance is further provided. The apparatus may be applied in a second terminal for implementing the methods described in Embodiment 5 (FIG. 13).

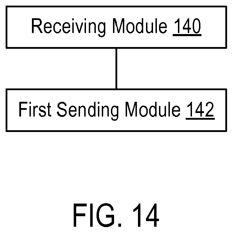

FIG. 14 is a block diagram of an alternative apparatus for terminal remote assistance according to some embodiments of the disclosure.

In the illustrated embodiment, the apparatus comprises: a receiving module 140, configured to receive a current status of a first terminal of a task server, wherein the current status is a current status of a local application in the first terminal requesting the second terminal to perform an assistance operation; and a first sending module 142, configured to send an assistance operation instruction corresponding to the current status to the task server, wherein the instruction to perform the assistance operation is used for instructing the task server to perform the assistance operation on the current status to obtain assistance operation results.

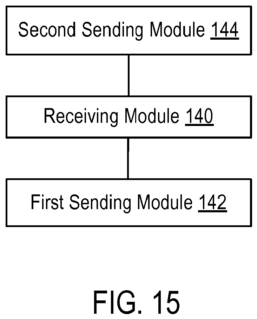

Alternatively, as shown in FIG. 15, the apparatus for terminal remote assistance provided by the embodiment may further comprise the following processing modules: a second sending module 144, configured to send a login request to the task server, wherein the login request includes an identity token of the second terminal, the identity token being used to provide a verification basis for the task server to verify the second terminal.

It should be noted that various modules involved in the embodiment can be implemented through software or hardware. The hardware may be implemented in the following manner, but is not limited thereto: the various modules are respectively located in a separate processor, the various modules are all located in the same processor, or the various modules are located in different processors and in any combination.

It should be noted that reference can be made to related descriptions of Embodiment 1 (FIGS. 1-4) for the alternative implementation of the apparatus for terminal remote assistance provided by the embodiment; therefore, details will not be repeated herein

### Embodiment 7

Another embodiment further provides a system for terminal remote assistance.

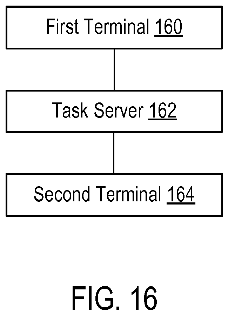

As shown in FIG. 16, the system comprises: a first terminal 160, a task server 162, and a second terminal 164.

The first terminal 160 is configured to upload a current status of the first terminal 160 to the task server 162, wherein the current status is a status of a local application in the first terminal 160 requesting the second terminal 164 to perform an assistance operation. The task server 162 is configured to send the current status to the second terminal 164, receive an assistance operation instruction sent by the second terminal 164 and corresponding to the current status, perform the assistance operation on the current status based on the assistance operation instruction, and send obtained assistance operation results to the first terminal 160. The second terminal 164 is configured to receive the current status, and send the instruction to perform the assistance operation corresponding to the current status to the task server 162.

Alternatively, the task server 162 is further configured to receive an assistance request from the first terminal 160 before sending the current status of the first terminal 160 to the second terminal 164, wherein the assistance request is used for requesting the second terminal 164 to provide remote assistance to the current status.

Alternatively, the assistance request received by the task server 162 includes a first identifier of the first terminal 160 and a second identifier of the second terminal 164. The task server 162 is further configured to determine a presence of a mapping relationship between the first identifier and the second identifier before sending the current status of the first terminal 160 to the second terminal 164.

In an alternative embodiment, the task server 162 determines the mapping relationship in the following way: receiving from the first terminal 160 a binding request for establishing the mapping relationship; sending the binding request to the second terminal 164; and receiving notification information sent by the second terminal 164 and used for instructing that establishing the mapping relationship is permitted, and establishing the mapping relationship after receiving the notification information.

Reference may be made to the descriptions in Embodiments 1 to 7 for specific structural forms and specific functions of the task server, the first terminal, and the second terminal involved in the embodiment, therefore repeated descriptions will not be made herein. Hereinafter, only detailed descriptions will be made for the specific structure of the system for terminal remote assistance provided by the embodiment.

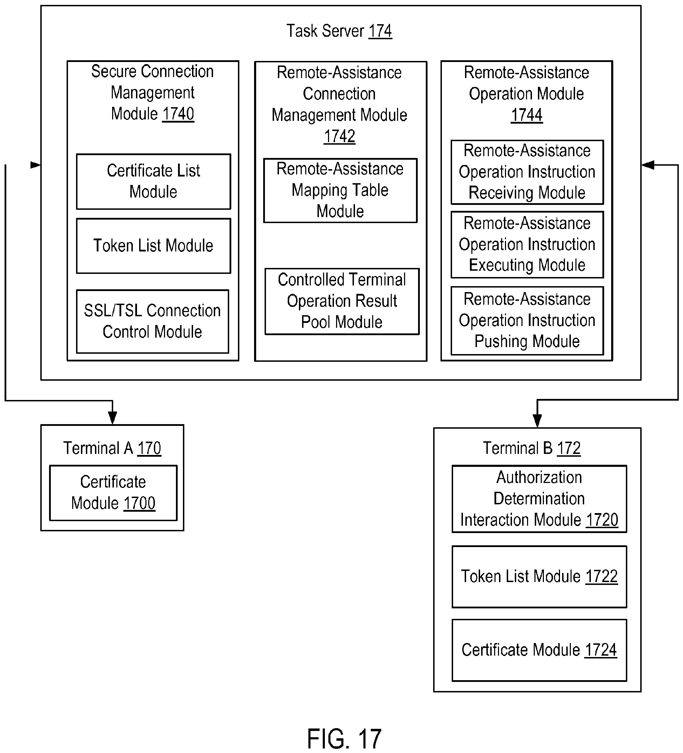

As shown in FIG. 17, the system includes a terminal A 170 representing a remote-assistance controlled terminal device, and a terminal B 172 representing a remote-assistance implementing terminal device.

Terminal A 170 (equivalent to the first terminal 160) comprises a certificate module 1700 configured to maintain a certificate delivered by the task server for establishing the SSL/TLS secure channel between terminal A and the task server during an initialization phase.

Terminal B 172 (equivalent to the second terminal 164) includes an authorization and determination interaction module 1720, a Token list module 1722, and a certificate module 1724.

The authorization and determination interaction module 1720 is configured for interaction between terminal B and a user of terminal B, wherein after terminal B receives a remote assistance binding request initiated by terminal A, a dialog box pops up to request the user of terminal B to verify whether to accept the binding request of terminal A.

The token list module 1722 is configured to save and maintain one or more pieces of token data delivered by the task server. When a plurality of remote-assistance controlled terminal devices initiate a request for performing remote assistance binding with the terminal device B, the token list module of terminal B will maintain a plurality of pieces of token data.

The certificate module 1724 is configured to maintain a certificate delivered by the task server for establishing the SSL/TLS secure channel between terminal B and the task server during the initialization phase.

The task server 174 comprises three parent modules: a secure connection management module 1740, a remote assistance connection management module 1742, and a remote assistance operation module 1744.

The secure connection management module 1740 comprises three modules: a certificate list module, a Token list module, and an SSL/TLS connection control module.

The certificate list module is configured to save a certificate delivered to each terminal device during an initialization phase of each terminal device and used for establishing the SSL/TLS secure channel between the terminal and the task server.

The token list module is configured to save token data delivered to terminal B after establishing the remote assistance binding between terminal A and terminal B. When the terminal A device initiates a request for performing remote assistance binding with a plurality of remote-assistance implementing terminal devices, the token list module of the task server will maintain a plurality of pieces of token data.

The SSL/TLS connection control module is configured to establish the SSL/TLS secure channel with the terminal device.

The remote-assistance connection management module comprises two modules: a remote-assistance mapping table module and a controlled terminal operation result pool module.

The remote-assistance mapping table module is configured to save and maintain a remote-assistance mapping relationship between terminal A and terminal B.

The controlled terminal operation result pool module is a separate storage space locally allocated by the task server for maintaining operation results of terminal A.

The remote-assistance operation module comprises three modules: a remote-assistance operation instruction receiving module, a remote-assistance operation instruction executing module, and a remote-assistance operation result pushing module.

The remote-assistance operation instruction receiving module is configured to receive operation result instruction information directed to terminal A from terminal B.

The remote-assistance operation instruction executing module is configured to perform an operation computation directed to terminal A in the operation result pool of terminal A based on the operation result instruction information from terminal B.

The remote-assistance operation result pushing module is configured for the task server to push the operation results directed to terminal A to terminal A, so as to fulfill the remote assistance operation performed on terminal A by terminal B.

From the embodiment, it is clear that by adopting the method in which the task server performs the assistance operation on the current status based on the assistance operation instruction, sent by the second terminal, that corresponds to the current status of the first terminal and sends the assistance operation results to the first terminal, the objective to reduce the burden of a terminal device is achieved. The objective solves the technical problem of a heavier burden caused by the terminal device having to consume its own operating resources to achieve the goal of providing remote assistance.

### Embodiment 8

Another embodiment further provides a storage medium. Alternatively, in the embodiment, the storage medium may be used for saving program codes corresponding to the actions executed by the task server in the method for providing remote terminal assistance provided by Embodiment 3 (FIG 10).

Alternatively, in the embodiment, the storage medium may be located in any of the computer terminals in a computer terminal cluster in a computer network or located in any of the mobile terminals in a mobile terminal cluster.

Alternatively, in the embodiment, the storage medium is configured to store program codes for performing the following steps of a second terminal: sending a current status of a first terminal to the second terminal, wherein the current status is a status of a local application, located in the first terminal, in need of an assistance operation performed by the second terminal; receiving, by the task server, an assistance operation instruction, sent by the second terminal, that corresponds to the current status; performing, by the task server, the assistance operation on the current status based on the instruction to perform the assistance operation to obtain assistance operation results; and sending, by the task server, the assistance operation results to the first terminal, thereby achieving the goal of the second terminal performing the remote assistance operation on the first terminal.

Alternatively, in the embodiment, the storage medium is configured to store program codes for performing the following steps: sending an upload request to the first terminal; and receiving and saving the current status uploaded by the first terminal based on the upload request.

Alternatively, in the embodiment, the storage medium is configured to store program codes for performing the following steps: receiving a login request sent by the second terminal, wherein the login request includes an identity token pre-delivered by the task server to the second terminal; and verifying the identity token, wherein the current status of the first terminal is sent to the second terminal after the identity token is verified.

Alternatively, in the embodiment, the storage medium is configured to store program codes for performing the following step: receiving an assistance request from the first terminal, wherein the assistance request is used for requesting the second terminal to provide remote assistance to the current status.

Alternatively, in the embodiment, the storage medium is configured to store program codes for performing the following step: determining that there is a mapping relationship between the first identifier and the second identifier.

Alternatively, in the embodiment, the storage medium is configured to store program codes for performing the following steps: receiving, from the first terminal, a binding request for establishing the mapping relationship; sending the binding request to the second terminal; and receiving notification information sent by the second terminal for instructing that establishing the mapping relationship is permitted, and establishing the mapping relationship after receiving the notification information.

It should be noted herein that any one of the computer terminal clusters may establish a communication relationship with a website server and a scanner; the scanner may scan a value instruction of a web application executed by the computer terminal.

Alternatively, in the embodiment, the storage medium may include, but is not limited to various media capable of storing program codes, such as a USB flash disk, a Read-Only Memory (ROM), a Random Access Memory (RAM), a mobile hard disk, a disk or a compact disk.

Alternatively, reference can be made to the examples described in Embodiment 3 (FIG. 10) for specific examples in the embodiment; therefore, the embodiment will not be repeatedly described herein

### Embodiment 9

Another embodiment further provides a storage medium. Alternatively, in the embodiment, the storage medium may be used for saving program codes corresponding to the actions executed by the second terminal in the method for providing remote terminal assistance provided by Embodiment 3 (FIG. 10).

Alternatively, in the embodiment, the storage medium may be located in any of the computer terminals in a computer terminal cluster in a computer network or located in any of the mobile terminals in a mobile terminal cluster.

Alternatively, in the embodiment, the storage medium is configured to store program codes for performing the following steps of the second terminal: receiving a current status of a first terminal of a task server, wherein the current status is a current status of a local application, located in the first terminal, in need of an assistance operation performed by the second terminal; and sending to the task server an assistance operation instruction corresponding to the current status, wherein the assistance operation instruction is used for instructing the task server to perform the assistance operation on the current status to obtain assistance operation results.

Alternatively, in the embodiment, the storage medium is further configured to store program codes for performing the following step: including an identity token of the second terminal in a login request sent to the task server, the identity token being used to provide a verification basis for the task server to verify the second terminal.

Alternatively, in the embodiment, the storage medium may include, but is not limited to various media capable of storing program codes, such as a USB flash disk, a Read-Only Memory (ROM), a Random Access Memory (RAM), a mobile hard disk, a disk or a compact disk.

Alternatively, reference can be made to the examples described in the Embodiment 2 (FIGS. 5-9) for specific examples in the embodiment; therefore the, embodiment will not be repeatedly described herein

### Embodiment 10

Another embodiment further provides another storage medium. Alternatively, in the embodiment, the storage medium may be used for saving the program codes corresponding to the actions executed by the first terminal in the method for providing remote terminal assistance provided by the Embodiment 5 (FIG. 13).

Alternatively, in the embodiment, the storage medium may be located in any of the computer terminals in a computer terminal cluster in a computer network or located in any of the mobile terminals in a mobile terminal cluster.

Alternatively, in the embodiment, the storage medium is configured to store program codes for performing the following steps of the first terminal: receiving a current status of a first terminal of a task server, wherein the current status is a current status of a local application in the first terminal requesting the second terminal to perform an assistance operation; and sending to the task server an assistance operation instruction corresponding to the current status, wherein the instruction to perform the assistance operation is used for instructing the task server to perform the assistance operation on the current status to obtain assistance operation results.

Alternatively, in the embodiment, the storage medium is further configured to store program codes for performing the following step of the first terminal: sending to the task server a login request including an identity token of the second terminal, the identity token being used to provide a verification basis for the task server to verify the second terminal.

The aforementioned sequence numbers of the embodiments of the disclosure are merely for the convenience of description, and do not imply merits and demerits of the embodiments.

In the aforementioned embodiments, the description of each embodiment has its own focus, and a part in a certain embodiment not described in detail can refer to the related descriptions of other embodiments.

In the several embodiments provided herein, it should be understood that the disclosed terminal or server can be implemented in other ways. The device embodiments described above are merely schematic. For example, the division of the units is merely a logical function division; there can be other division methods in practical implementation. For example, a plurality of units or components can be combined or can be integrated into another system, or some features can be ignored, or not executed. From another point of view, the displayed or discussed inter-coupling or direct coupling or communication connection may be indirect coupling or communication connection implemented by means of some interfaces, units or modules and may be electrical or in other forms.

The units described above as separate components may or may not be physically separate. The components shown as units may or may not be physical units, i.e., may not only be located in one place, but also distributed to a plurality of network units. Part or all of the units can be chosen to implement the purpose of the embodiment schemes according to actual requirements.

In addition, respective function units in respective embodiments of the disclosure can be integrated into one processing unit, or respective units can physically exist alone, or two or more units can be integrated into one unit. The integrated units can be implemented by means of hardware or software function units.

The integrated units described above, when achieved by means of software function units and sold or used as independent products, can be stored in a computer-readable storage medium. Based on such understanding, the essence of or a part of the disclosed embodiments that make a contribution to the prior art, or all or part of the technical solutions may be embodied in the form of a computer software product that is stored in a storage medium, including several instructions to enable a computer device (which may be a personal computer, a server, or a network facility, etc.) to execute all or some steps of the methods of respective embodiments of the disclosure. The foregoing storage medium comprises: various media capable of storing program codes, such as a USB Hash disk, a Read-Only Memory (ROM), a Random Access Memory (RAM), a mobile hard disk, a disk or a compact disk, etc.

The above-mentioned descriptions are only exemplary embodiments of the disclosure. It should be noted that for a person ordinarily skilled in the art, several improvements and modifications may also be made without departing from the principles of the disclosure, and these improvements and modifications should also be considered as the protective scope of the disclosure.

## Claims

1. A method performed by a task server, the method comprising:
acquiring, a current status of a first terminal, wherein the current status of the first terminal represents a status of a local application at the first terminal in need of an assistance operation from a second terminal
transmitting (S202) the current status of the first terminal to the second terminal;
receiving (S204), from the second terminal, an assistance operation instruction corresponding to the assistance operation needed by the local application;
obtaining assistance operation results by performing (S206) the assistance operation for the local application based on the assistance operation instruction; and
transmitting (S208) the assistance operation results to the first terminal.

2. The method of claim 1, wherein, the step of acquiring the current status of the first terminal comprises:
transmitting an upload request to the first terminal;
receiving and saving the current status of the first terminal in response to the upload request.

3. The method of claim 1, wherein, prior to transmitting the current status of the first terminal, the method comprises:
receiving a login request from the second terminal, the login request including an identity token pre-delivered to the second terminal; and
verifying the identity token.

4. The method of claim 1, wherein the current status comprises one of operation results of the local application, JavaScript computation results, or a captured local desktop image.

5. The method of claim 1, wherein, prior to transmitting the current status of the first terminal, the method comprises:
transmitting a first certificate to the first terminal and a second certificate to the second terminal;
receiving, from the first terminal, a binding establishment request, the binding establishment request including identity information of the second terminal; and
transmitting a binding request to the second terminal upon determining that a mapping relationship between the first terminal and second terminal has not been established, the binding request including identity information of the first terminal and second terminal.

6. The method of claim 5, further comprising:
receiving, from the second terminal, a binding acceptance notification and storing a mapping relationship between the first terminal and the second terminal;
establishing a secure connection with the second terminal based on the second certificate and transmitting a token to the second terminal using the secure connection; and
notifying the first terminal and the second terminal of a successful binding.

7. The method of claim 6, further comprising:
establishing a secure connection with the first terminal using the first certificate;
receiving, from the first terminal, a login request using the secure connection, the login request including identity information of the first terminal;
verifying the identity of the first terminal; and
receiving, from the first terminal, a remote assistance request, the remote assistance request including account information of the first terminal and account information of the second terminal.

8. The method of claim 7, further comprising:
receiving, from the first terminal, the current status in response to a request to upload the current status; and
synchronizing operation results included within the current status to an operation result pool.

9. The method of claim 8, further comprising:
establishing a secure connection with the second terminal;
receiving a login request from the second terminal and verifying the token stored by the second terminal; and
transmitting the operation results to the second terminal.

10. The method of claim 9, further comprising:
receiving an assistance operation instruction from the second terminal;
performing a computation on the operation results stored in the operation result pool based on the assistance operation instruction; and
pushing results of the computation to the first terminal.

11. The method of claim 6, wherein transmitting, to the first terminal, a request to upload the current status comprises instructing the first terminal to stop current operation computations.

12. The method of claim 5, wherein receiving, from the second terminal, a binding acceptance notification comprises receiving an acceptance of a pop up dialog box displayed on the second terminal.

13. The method of claim 1, wherein the current status of a first terminal is retrieved from a local database.

14. A computer-readable medium having stored thereon a plurality of instructions, the plurality of instructions including instructions which, when executed by a processor, cause the processor to perform the steps of a method according to any one of the preceding claims.

15. A system adapted to carry out a method according to any one of claims 1 to 13.

## Patentansprüche

1. Verfahren, das von einem Aufgabenserver durchgeführt wird, wobei das Verfahren umfasst:
Erfassen eines aktuellen Status eines ersten Endgeräts, wobei der aktuelle Status des ersten Endgeräts einen Status einer lokalen Anwendung an dem ersten Endgerät darstellt, die eine Unterstützungsoperation von einem zweiten Endgerät benötigt;
Übertragen (S202) des aktuellen Status des ersten Endgeräts an das zweite Endgerät;
Empfangen (S204) einer Unterstützungsoperationsanweisung von dem zweiten Endgerät, die der von der lokalen Anwendung benötigten Unterstützungsoperation entspricht;
Erhalten von Unterstützungsoperationsergebnissen durch Ausführen (S206) der Unterstützungsoperation für die lokale Anwendung basierend auf der Unterstützungsoperationsanweisung; und
Übertragen (S208) der Unterstützungsoperationsergebnisse an das erste Endgerät.

2. Verfahren nach Anspruch 1, bei dem der Schritt des Erfassens des aktuellen Status des ersten Endgerätes umfasst:
Übertragen einer Upload-Anforderung an das erste Endgerät;
Empfangen und Speichern des aktuellen Status des ersten Endgeräts in Reaktion auf die Upload-Anforderung.

3. Verfahren nach Anspruch 1, wobei das Verfahren vor dem Übertragen des aktuellen Status des ersten Endgerätes umfasst:
Empfangen einer Anmeldeanforderung von dem zweiten Endgerät, wobei die Anmeldeanforderung ein dem zweiten Endgerät vorab geliefertes Identitäts-Token enthält; und
Verifizieren des Identitäts-Tokens.

4. Verfahren nach Anspruch 1, bei dem der aktuelle Status eines von Operationsergebnissen der lokalen Anwendung, JavaScript-Berechnungsergebnissen oder einem erfassten lokalen Desktop-Bild umfasst.

5. Verfahren nach Anspruch 1 , wobei das Verfahren vor dem Übertragen des aktuellen Status des ersten Endgeräts Folgendes umfasst:
Übertragen eines ersten Zertifikats an das erste Endgerät und eines zweiten Zertifikats an das zweite Endgerät;
Empfangen einer Verbindungsaufbauanforderung von dem ersten Endgerät, wobei die Verbindungsaufbauanforderung Identitätsinformationen des zweiten Endgerätes enthält; und
Übertragen einer Verbindungsanforderung an das zweite Endgerät, wenn festgestellt wird, dass eine Abbildungsbeziehung zwischen dem ersten Endgerät und dem zweiten Endgerät nicht hergestellt worden ist, wobei die Verbindungsanforderung Identitätsinformationen des ersten Endgeräts und des zweiten Endgeräts enthält.

6. Verfahren nach Anspruch 5, das ferner umfasst:
Empfangen einer Verbindungsannahmebenachrichtigung vom zweiten Endgerät und Speichern einer Abbildungsbeziehung zwischen dem ersten Endgerät und dem zweiten Endgerät;
Herstellen einer sicheren Verbindung mit dem zweiten Endgerät auf der Grundlage des zweiten Zertifikats und Übertragen eines Tokens an das zweite Endgerät unter Verwendung der sicheren Verbindung; und
Benachrichtigen des ersten Endgerätes und des zweiten Endgerätes über eine erfolgreiche Verbindung.

7. Verfahren nach Anspruch 6, das ferner umfasst:
Herstellen einer sicheren Verbindung mit dem ersten Endgerät unter Verwendung des ersten Zertifikats;
Empfangen einer Anmeldeanfrage von dem ersten Endgerät unter Verwendung der sicheren Verbindung, wobei die Anmeldeanfrage Identitätsinformationen des ersten Endgeräts enthält;
Verifizieren der Identität des ersten Endgeräts; und
Empfangen einer Fernunterstützungsanforderung von dem ersten Endgerät, wobei die Fernunterstützungsanforderung Kontoinformationen des ersten Endgerätes und Kontoinformationen des zweiten Endgerätes enthält.

8. Verfahren nach Anspruch 7, das ferner umfasst:
Empfangen des aktuellen Status von dem ersten Endgerät als Antwort auf eine Anforderung, den aktuellen Status hochzuladen; und
Synchronisieren von im aktuellen Status enthaltenen Operationsergebnissen mit einem Operationsergebnis-Pool.

9. Verfahren nach Anspruch 8, das ferner umfasst:
Herstellen einer sicheren Verbindung mit dem zweiten Endgerät;
Empfangen einer Anmeldeanforderung von dem zweiten Endgerät und Verifizieren des von dem zweiten Endgerät gespeicherten Tokens; und
Übertragen der Operationsergebnisse an das zweite Endgerät.

10. Verfahren nach Anspruch 9, das ferner umfasst:
Empfangen eines Unterstützungsoperationsbefehls von dem zweiten Endgerät;
Durchführen einer Berechnung mit den in dem Operationsergebnis-Pool gespeicherten Operationsergebnissen auf der Grundlage des Unterstützungsoperationsbefehls; und
Übermitteln der Ergebnisse der Berechnung an das erste Endgerät.

11. Verfahren nach Anspruch 6, bei dem das Übertragen einer Anforderung zum Hochladen des aktuellen Status an das erste Endgerät das Anweisen des ersten Endgeräts umfasst, die aktuellen Betriebsberechnungen zu stoppen.

12. Verfahren nach Anspruch 5, bei dem das Empfangen einer Verbindungsannahme-Benachrichtigung von dem zweiten Endgerät das Empfangen einer Annahme eines auf dem zweiten Endgerät angezeigten Pop-up-Dialogfelds umfasst.

13. Verfahren nach Anspruch 1, bei dem der aktuelle Status eines ersten Endgeräts aus einer lokalen Datenbank abgerufen wird.

14. Computerlesbares Medium, auf dem eine Mehrzahl von Befehlen gespeichert ist, wobei die Mehrzahl von Befehlen Befehle umfasst, die, wenn sie von einem Prozessor ausgeführt werden, den Prozessor veranlassen, die Schritte eines Verfahrens nach einem der vorhergehenden Ansprüche durchzuführen.

15. System, eingerichtet zur Durchführung eines Verfahrens nach einem der Ansprüche 1 bis 13.

## Revendications

1. Procédé exécuté par un serveur monofonctionnel, le procédé comprenant les étapes consistant à :
acquérir, un état actuel d'un premier terminal, où l'état actuel du premier terminal représente un état d'une application locale au niveau du premier terminal nécessitant une opération d'assistance d'un deuxième terminal,
transmettre (S202) l'état actuel du premier terminal au deuxième terminal ;
recevoir (S204), depuis le deuxième terminal, une instruction d'opération d'assistance correspondant à l'opération d'assistance requise par l'application locale ;
obtenir des résultats d'opération d'assistance en effectuant (S206) l'opération d'assistance pour l'application locale sur la base de l'instruction d'opération d'assistance ; et
transmettre (S208) les résultats d'opération d'assistance au premier terminal.

2. Procédé selon la revendication 1, dans lequel l'étape d'acquisition de l'état actuel du premier terminal comprend les étapes consistant à :
transmettre une demande de téléchargement au premier terminal ;
recevoir et sauvegarder l'état actuel du premier terminal en réponse à la demande de téléchargement.

3. Procédé selon la revendication 1, où, préalablement à la transmission de l'état actuel du premier terminal, le procédé comprend les étapes consistant à :
recevoir une demande d'ouverture de session provenant du deuxième terminal, la demande d'ouverture de session comportant un jeton d'identité pré-remis au deuxième terminal ; et
vérifier le jeton d'identité.

4. Procédé selon la revendication 1, dans lequel l'état actuel comprend des résultats d'opération de l'application locale, ou des résultats de calcul JavaScript, ou une image de bureau locale capturée.

5. Procédé selon la revendication 1, où, préalablement à la transmission de l'état actuel du premier terminal, le procédé comprend les étapes consistant à :
transmettre un premier certificat au premier terminal et un deuxième certificat au deuxième terminal ;
recevoir, depuis le premier terminal, une demande d'établissement de liaison, la demande d'établissement de liaison comportant des informations d'identité du deuxième terminal ; et
transmettre une demande de liaison au deuxième terminal lors de la détermination qu'une relation de mise en correspondance entre le premier terminal et le deuxième terminal n'a pas été établie, la demande de liaison comportant des informations d'identité du premier terminal et du deuxième terminal.

6. Procédé selon la revendication 5, comprenant en outre les étapes consistant à :
recevoir, depuis le deuxième terminal, une notification d'acceptation de liaison et stocker une relation de mise en correspondance entre le premier terminal et le deuxième terminal ;
établir une connexion sécurisée avec le deuxième terminal sur la base du deuxième certificat et transmettre un jeton au deuxième terminal en utilisant la connexion sécurisée ; et
notifier au premier terminal et au deuxième terminal une liaison réussie.

7. Procédé selon la revendication 6, comprenant en outre les étapes consistant à :
établir une connexion sécurisée avec le premier terminal en utilisant le premier certificat ;
recevoir, depuis le premier terminal, une demande d'ouverture de session en utilisant la connexion sécurisée, la demande d'ouverture de session comportant des informations d'identité du premier terminal ;
vérifier l'identité du premier terminal ; et
recevoir, depuis le premier terminal, une demande d'assistance à distance, la demande d'assistance à distance comportant des informations de compte du premier terminal et des informations de compte du deuxième terminal.

8. Procédé selon la revendication 7, comprenant en outre les étapes consistant à :
recevoir, depuis le premier terminal, l'état actuel en réponse à une demande de téléchargement de l'état actuel ; et
synchroniser les résultats d'opération inclus dans l'état actuel avec un groupe de résultats d'opération.

9. Procédé selon la revendication 8, comprenant en outre les étapes consistant à :
établir une connexion sécurisée avec le deuxième terminal ;
recevoir une demande d'ouverture de session provenant du deuxième terminal et vérifier le jeton stocké par le deuxième terminal ; et
transmettre les résultats d'opération au deuxième terminal.

10. Procédé selon la revendication 9, comprenant en outre les étapes consistant à :
recevoir une instruction d'opération d'assistance provenant du deuxième terminal ;
effectuer un calcul sur les résultats d'opération stockés dans le groupe de résultats d'opération sur la base de l'instruction d'opération d'assistance ; et
pousser les résultats du calcul vers le premier terminal.

11. Procédé selon la revendication 6, dans lequel la transmission, au premier terminal, d'une demande de téléchargement de l'état actuel comprend le fait de donner une instruction au premier terminal d'arrêter les calculs d'opérations actuelles.

12. Procédé selon la revendication 5, dans lequel la réception, depuis le deuxième terminal, d'une notification d'acceptation de liaison comprend la réception d'une acceptation d'une boîte de dialogue contextuelle affichée sur le deuxième terminal.

13. Procédé selon la revendication 1, dans lequel l'état actuel d'un premier terminal est extrait d'une base de données locale.

14. Support lisible par ordinateur sur lequel sont stockées une pluralité d'instructions, la pluralité d'instructions comportant des instructions qui, lorsqu'elles sont exécutées par un processeur, amènent le processeur à mettre en œuvre les étapes d'un procédé selon l'une quelconque des revendications précédentes.

15. Système conçu pour exécuter un procédé selon l'une quelconque des revendications 1 à 13.
